# EUROPÄISCHE PATENTSCHRIFT

(11) **EP 2 766 651 B1**
(45) Veröffentlichungstag und Bekanntmachung des Hinweises auf die Patenterteilung: **07.06.2017**
(21) Anmeldenummer: 12778044.3
(22) Anmeldetag: 11.10.2012
(51) Int. Cl.: F16L 53/00

(54) **KONFEKTIONIERTE MEDIENLEITUNG MIT ZUMINDEST EINER BEHEIZBAREN MEDIENLEITUNG UND MIT ZUMINDEST EINEM ZUMINDEST TEILWEISE BEHEIZBAREN LEITUNGSVERBINDER**
ASSEMBLED MEDIA LINE COMPRISING AT LEAST A HEATABLE MEDIA LINE AND AT LEAST A PARTIALLY HEATABLE LINE-CONNECTOR
CONDUITE CONFECTIONNÉE COMPRENANT AU MOINS UNE CONDUITE CHAUFFABLE ET AU MOINS UN CONNECTEUR AU MOINS PARTIELLEMENT CHAUFFABLE

(30) Priorität: 14.10.2011 DE 102011115890; 14.10.2011 DE 202011106751 U
(43) Veröffentlichungstag der Anmeldung: 20.08.2014
(73) Patentinhaber: Voss Automotive GmbH, 51688 Wipperfürth (DE)
(72) Erfinder: DE BEER, Daniel, D-51766 Engelskirchen (DE); PLIETSCH, Reinhard, 42929 Wermelskirchen (DE); SIEPER, Günter, 42853 Remscheid (DE); SCHWARZKOPF, Otfried, 51515 Kürten (DE)
(74) Vertreter: Rebbereh, Cornelia
(86) Internationale Anmeldenummer: PCT/EP2012/004261
(87) Internationale Veröffentlichungsnummer: WO 2013/053478

(56) Entgegenhaltungen:
- EP-A1- 0 284 669
- EP-A1- 1 985 908
- EP-A2- 1 777 452
- WO-A1-2005/124219
- WO-A1-2007/032034
- WO-A1-2009/124910
- DE-A1-102006 060 314
- DE-T5-112008 003 310
- DE-U1-202007 010 502

## Beschreibung

Die Erfindung betrifft eine konfektionierte Medienleitung mit zumindest einer beheizbaren Medienleitung und mit zumindest einem zumindest teilweise beheizbaren Leitungsverbinder.

Konfektionierte Medienleitungen mit beheizbaren Medienleitungen und zumindest teilweise beheizbaren Leitungsverbindern sind im Stand der Technik bekannt. Insbesondere in Fahrzeugen sind Medienleitungen zum Leiten von zumeist flüssigen Medien vorgesehen. Bei niedrigen Temperaturen drohen die Medienleitungen einzufrieren, weshalb eine Beheizung vorgesehen wird. Leitungsverbinder dienen zum Verbinden von zumindest zwei Medienleitungen oder zur Anschlussverbindung einer Medienleitung mit einem beliebigen Aggregat. Durch die Medienleitungen werden oftmals solche Medien geführt, die aufgrund eines relativ hohen Gefrierpunktes bereits bei noch recht hohen Umgebungstemperaturen zum Gefrieren neigen, wodurch die Funktionsfähigkeit bspw. eines Fahrzeugs beeinträchtigt oder sogar erheblich gestört werden kann. Ersichtlich ist dies insbesondere bei Wasserleitungen für Scheibenwaschanlagen der Fall, ebenso wie bei Medienleitungen, mittels derer wässrige Harnstofflösung als Medium transportiert wird, die als NOₓ-Reaktionsadditiv für Dieselmotoren mit sogenannten SCR-Katalysatoren eingesetzt werden.

Aus der EP 2 102 464 B1 ist eine Vorrichtung zum Befördern eines fluiden Mediums mit einer beheizten Förderleitung und zumindest einer Systemkomponente mit einem beheizten Innenbereich bekannt, wobei die Förderleitung ein Leitungsanschlussstück umfasst und die Systemkomponente ein mit dem Leitungsanschlussstück direkt oder indirekt gekoppeltes Modulanschlussstück umfasst. Ferner umfasst die Vorrichtung zumindest eine Wärmeleithülse, die in das Leitungsanschlussstück und das Modulanschlussstück eingesteckt wird. Die Wärmeleithülse ist dabei zur Übertragung von Wärme thermisch mit der beheizten Förderleitung bzw. dem beheizten Innenbereich gekoppelt, wobei die Wärmeleithülse eine fluidische Verbindung der Förderleitung und des Innenbereichs der Systemkomponente herstellt. Die Wärmeleithülse besteht aus einem Metall, insbesondere Kupfer, Aluminium, Messing, Zink, Silber, Gold, Magnesium, Wolfram, Graphit, oder einem thermisch leitfähigen Kunststoff, der mit Graphit oder Metallpartikeln gefüllt ist.

Die DE 11 2008 003 310 T5 offenbart eine Heizrohrleitung für den Transport von Fluid, wobei die Rohrleitung aus einem Rohr und zumindest einem Anschlussstück besteht, das an einem Ende des Rohres platziert ist. Ferner weist die Heizrohrleitung Mittel zur elektrischen Widerstandsbeheizung auf, die sich über die Länge des Rohres erstrecken, von denselben Verbindungsmitteln mit Energie versorgt wie die Mittel zur Beheizung, sowie Mittel zur Übertragung einer Heizleistung durch Wärmeleitung in Richtung des Bereichs des Anschlussstücks oder der Anschlussstücke. Als Mittel für die Übertragung der Heizleistung auf den Bereich des Anschlussstücks oder der Anschlussstücke ist eine Muffe aus einem Material mit guten Wärmeleitungseigenschaften offenbart, die einen Endbereich des Rohres mit dem Inneren des entsprechenden Anschlussstücks verbindet. Die Muffe ist ein röhrenförmiges Teil aus Metall, das in das Anschlussstück eingearbeitet und in das entsprechende Ende des Rohres eingesetzt ist. Zwischen Grundschichten des Rohres ist zumindest ein elektrischer Widerstandsdraht eingesetzt, der sich über die Länge des Rohres erstreckt, wobei die Enden des elektrischen Widerstandsdrahtes aus dem Rohr in dem Endbereich von diesem heraustreten und mit einem elektrischen Verbinder verbunden sind, der dem Anschluss an eine externe elektrische Energiequelle dient.

Aus der DE 20 2007 010 502 U1 ist eine konfektionierte Medienleitung mit einem Leitungsverbinder bekannt, bestehend aus einem Verbinderkörper mit einem Anschlussabschnitt, an dem eine Medienleitung angeschlossen ist und mit einem Kupplungsabschnitt zum dichtenden Verbinden mit einem Gegenkupplungsteil. Die Medienleitung ist mit einem Heizdraht versehen und der Heizdraht im Verbindungszustand von dem Verbinderkörper und der Medienleitung derart weitergeführt, dass er zumindest teilweise am Kupplungsabschnitt angeordnet ist. Der Heizdraht ist im Inneren des Verbinderkörpers angeordnet. Das Verbinderstück kann in Bezug auf seine Materialeigenschaften an das zu transportierende Fluid angepasst werden, um eine möglichst hohe Wärmeleitfähigkeit und chemische Beständigkeit zu erreichen. Der Verbinderkörper besteht z.B. aus Edelstahl, wenn die Leitung zum Transport von Harnstofflösungen verwendet wird. Der Kupplungsabschnitt des Verbinderkörpers dient zum dichtenden Verbinden mit einem Gegenkupplungsteil.

Die WO 2005/124219 A1 offenbart einen Fluidverbinder mit einem ersten Verbindungsabschnitt zum Verbinden mit einer Fluidleitung und einem zweiten Verbindungsabschnitt zum Verbinden mit einem Gegenkupplungsstück. Der Fluidverbinder umfasst einen Heizabschnitt, der mit einer Anzahl von Windungen eines Heizkabels umschlungen ist, so dass das Heizkabel von der Kupplung elektrisch isoliert ist. Der Zweck des Verbinders ist es, ein Beheizen des Teils der eingehäusten Fluidleitung zu ermöglichen, der nicht mit einer Beheizung in Form eines Heizkabels versehen ist. Der Verbinder wird aus Metall ausgebildet, insbesondere Edelstahl.

Aus der EP 0 284 669 A1 ist ein Verbindungsstück für beheizbare Schläuche bekannt. Die Schlauchbeheizung erfolgt mittels längs verlaufender, in die Schlauchwandung eingebetteter Heizleiter. An den freien Enden der Schläuche sind die Heizleiter durch Entfernen der Schlauchwandung freigelegt und die freigelegten Längen um die aus dem Lumen der Schläuche herausragenden Teilbereiche des Verbindungs- oder Verteilerstückes herum geschlungen. Der Bereich der Schlauchenden mit den herausragenden Teilbereichen des Verbindungselementes einschließlich der aufliegenden Heizleiter ist danach als unlösbares Blockelement mit einer Umhüllung aus Isoliermaterial umspritzt. Ein Heizleiter-Anschlussstück ist aus diesem Blockelement herausgeführt. Das Verbindungselement ist in Form eines Röhrchens aus wärmeleitfähigem Material, wie Kupfer, Aluminium oder Kunststoff ausgebildet, das in seinen äußeren Abmessungen in etwa dem Lumen des beheizbaren Schlauches entsprechen muss, um in dieses Lumen eingesetzt werden zu können.

Die WO 2007/032034 A1 offenbart einen Leitungsverbinder für eine beheizbare Leitung eines SCR-Systems, der einen Körper aufweist, der eine hydraulische Verbindung darstellt, um eine Harnstofflösung zu und von der beheizbaren Leitung strömen zu lassen. Der Leitungsverbinder weist eine elektrische Verbindung auf, die mit einem ersten Ende versehen ist, das mit einer elektrischen Energiequelle verbunden werden kann, und mit einem zweiten Ende, das mit einem Heizelement der Leitung verbunden werden kann. Die elektrische Verbindung ist ferner mit einem elektrischen Widerstand, der in den Körper des Leitungsverbinders eingebettet ist, versehen, dessen Material eine Polymerbasis ist und das thermisch leitfähig ist, um die Harnstofflösung erhitzen zu können, sobald der elektrische Widerstand mit Energie versorgt wird.

Aus der EP 1 985 908 A1 ist ein Leitungsverbinder für Medienleitungen bekannt, bestehend aus einem Verbinderstück mit mindestens einem Anschlussabschnitt zur Anschlussverbindung mit einer Medienleitung oder mit einem Aggregat und mit einem an den Anschlussabschnitt abgrenzenden Übergangsabschnitt mit einem Strömungskanal. Dabei sind zumindest im Bereich des Übergangsabschnitts elektrische Heizmittel in einer den Strömungskanal zumindest teilweise umschließenden Anordnung vorgesehen.

Die EP 1 777 452 A2 offenbart einen beheizbaren Steckverbinder zum Verbinden einer ersten Fluidleitung mit einer zweiten Fluidleitung in Zusammenwirken mit zumindest einem Gegensteckverbinder, wobei ein zu erwärmendes Medium zwischen der ersten Fluidleitung und der zweiten Fluidleitung durch den Steckverbinder strömt. Um einen derartigen Steckverbinder dahingehend zu verbessern, dass ein Einfrieren des zu erwärmenden Mediums im Steckverbinder verhindert werden kann, umfasst der Steckverbinder mindestens ein Heizelement zum Beheizen des zu erwärmenden Mediums. Der Steckverbinder weist ferner eine Heizlanze auf, die aus einem wärmeleitenden Material besteht und lang gestreckt ausgestaltet ist und in einen Kanal des ersten Gegensteckverbinders eingeführt werden kann. Die Heizlanze ist in Form eines rohrförmigen Elementes ausgebildet. Sie ist mit einem Heizelement wärmeleitend verbunden, so dass die von dem Heizelement erzeugte Wärme an die Heizlanze übertragen werden kann.

Aus der WO 2009/124910 A1 ist ein Leitungsverbinder für Medienleitungen bekannt, bestehend aus einem Verbinderstück mit mindestens einem Anschlussabschnitt zum Anschluss an eine Medienleitung oder ein Aggregat und mit einem an den Anschlussabschnitt angrenzendem Übergangsabschnitt mit einem inneren Strömungskanal. Um einen derartigen Leitungsverbinder, der sich bei strömungsoptimaler Ausführung seines Innenkanals durch einen verringerten Herstellungsaufwand auszeichnet, zu schaffen, ist in den Übergangsabschnitt ein Leitungsstück eingebettet, das zumindest einen Teil der Wandung des inneren Strömungskanals bildet.

Bei Gefrieren des durch die Förderleitung und die Systemkomponente geführten Mediums besteht das Problem, dass die dünnwandige Wärmeleithülse aus dem Innenbereich der Systemkomponente herausgeschoben wird. Ferner ist die Montage der Wärmeleithülse im Übergangsbereich von Förderleitung und Systemkomponente mit nicht unerheblichen Kosten und Aufwand verbunden. Der vorliegenden Erfindung liegt daher die Aufgabe zugrunde, eine dieses Problem lösende und kostengünstigere Möglichkeit zumindest einer Teilbeheizung eines Leitungsverbinders vorzusehen.

Die Aufgabe wird für eine konfektionierte Medienleitung mit den Merkmalen des Anspruchs 1 gelöst. Weiterbildungen der Erfindung sind in den abhängigen Ansprüchen definiert. Dadurch wird eine konfektionierte Medienleitung, umfassend eine beheizbare Medienleitung und zumindest einen zumindest teilweise beheizbaren Leitungsverbinder geschaffen, bei der nicht mehr zusätzlich eine Wärmeleithülse in den Übergangsbereich bzw. Anschlussbereich von Medienleitung und Leitungsverbinder eingesteckt wird, die beim Gefrieren des in der Medienleitung und im Leitungsverbinder geführten Mediums aus dem Leitungsverbinder herausgeschoben wird aufgrund der hierbei auftretenden Volumenausdehnung und somit keine Erwärmung des Leitungsverbinders und des entsprechenden Teils der Medienleitung mehr bewirken kann. Vielmehr ist oder wird der Leitungsverbinder selbst wärmeleitfähig oder wärmeleitend ausgebildet, so dass dieser zum Erwärmen des hindurchtretenden Mediums dient. Es fallen somit keine Kosten für das zusätzliche Montieren einer Wärmeleithülse, wie sie in der EP 2 102 464 B1 offenbart ist, an. Wärme wird direkt durch Wärmeleitung oder durch Beheizen in das wärmeleitfähige oder wärmeleitende Material des Leitungsverbinders eingeleitet bzw. eingekoppelt. In dem Körper des Leitungsverbinders sind keine Heizelemente vorgesehen. Heizelemente können auf der Außenseite des Leitungsverbinders angeordnet werden und/oder es kann ein Heizsystem, das Wärme in den Leitungsverbinder einkoppelt, insbesondere über die mit diesem verbundene Medienleitung und/oder über in dem Strömungskanal der Medienleitung innenliegende Heizelemente, vorgesehen werden. Da keine lose Wärmeleithülse mehr vorgesehen ist, besteht das Problem eines Herausschiebens derselben beim Gefrieren des hindurch geleiteten Mediums nicht. Auch die aufwendige Montage einer solchen Wärmeleithülse an einem bestehenden Leitungsverbinder und Medienleitung entfällt. Ferner kann beim Ausbilden des Leitungsverbinders aus einem wärmeleitfähigen oder wärmeleitenden Material der Strömungsquerschnitt beibehalten werden, anders als beim Einfügen einer Wärmeleithülse, wobei der Strömungsquerschnitt einer inneren Durchgangsöffnung durch den Leitungsverbinder hindurch eingeschränkt wird.

Der Leitungsverbinder besteht vorteilhaft zumindest im größten Teil des Bereichs aus einem wärmeleitfähigen oder wärmeleitenden Material, in dem Medium durch den Leitungsverbinder hindurch leitbar ist oder hindurch geleitet wird, also in dem Medium mit dem Leitungsverbinder in Kontakt tritt. Erfindungsgemäß ist das wärmeleitfähige oder wärmeleitende Material des Leitungsverbinders ein Material, das Wärme besser leitet als das Material oder zumindest eines der Materialien der Medienleitung. Hierdurch wird im Anschlussbereich der Medienleitung an den Leitungsverbinder sichergestellt, dass der aus dem wärmeleitfähigen Material bestehende Teil des Leitungsverbinders erwärmt wird und nicht Wärme aus dem Leitungsverbinder in die Medienleitung abfließt. Um sicherzustellen, dass der üblicherweise bezüglich seiner Material- bzw. Wandstärke dickere Leitungsverbinder zumindest in einem großen Teil des Bereichs, in dem Medium durch ihn hindurch geführt wird, erwärmt wird, erweist sich das Vorsehen eines Wärme besser leitenden Materials in diesem Bereich des Leitungsverbinders im Vergleich zum Material der Medienleitung als sehr vorteilhaft. Bei Vorsehen eines Medienleitungsmantels aus mehreren Schichten, einem sog. Multilayer-Aufbau, wird insbesondere ein Material verwendet, das Wärme besser leitet als zumindest eines der Materialien der Medienleitung.

Das wärmeleitfähige Material ist ein wärmeleitfähiger Kunststoff mit einer Wärmeleitfähigkeit von 1 - 20 W/(m•K), insbesondere 1 bis 7 W/(m·K). Ein zwar die Wärmeleitfähigkeit erhöhender hoher Füllstoffanteil im wärmeleitfähigen Kunststoff verschlechtert aber die mechanischen Eigenschaften des Kunststoffs erheblich, da dieser durch einen sehr hohen Füllstoffanteil sehr spröde wird und somit dessen Festigkeit stark abnimmt. Somit kann gerade bei einer Wärmeleitfähigkeit im Bereich von 1 - 7 W/(m•K) ein guter Kompromiss aus guten mechanischen Eigenschaften des Kunststoffs und einer akzeptablen Wärmeleitfähigkeit vorgesehen werden.

Der Leitungsverbinder kann zumindest einen als Anschlussabschnitt, insbesondere steckerartig, ausgebildeten Teil, der zum Eingreifen in einen Kupplungsteil ausgebildet und/oder vorgesehen ist, aufweisen. Erfindungsgemäß ist zumindest im Bereich des Anschlussabschnitts das wärmeleitfähige oder wärmeleitende Material vorgesehen. Der Kupplungsteil kann z.B. Teil einer Verbindung zu einem Aggregat sein oder eines Aggregats selbst sein. Aufgrund des Eingriffs des Anschlussabschnitts, insbesondere steckerartig ausgebildeten Teils, in den Kupplungsteil oder umgekehrt eines steckerartig ausgebildeten Teils ihn den Anschlussabschnitt kann ein Wärmetransport von dem einen in den anderen Teil hinein stattfinden. Hierdurch kann der Übergangsbereich zu einem Aggregat oder der Medienleitung beheizt werden, so dass auch dort ein bereits eingefrorenes Medium wieder aufgetaut oder verhindert werden kann, dass das in der Medienleitung, dem Übergangsbereich zum Leitungsverbinder und in diesem geführte Medium einfriert.

Vorteilhaft umfasst der Leitungsverbinder zumindest ein wärmeleitfähiges oder wärmeleitendes Hülsenelement, das als Zweikomponenten-Spritzgussteil mit diesem fest verbunden ist. Das wärmeleitende oder wärmeleitfähige Hülsenelement besteht vorteilhaft aus einem wärmeleitfähigen oder wärmeleitenden Kunststoff und ist durch Einspritzen fest mit dem übrigen Körper des Leitungsverbinders verbunden. Bei Vorsehen einer nachträglich in einen bestehenden Leitungsverbinder eingefügten Wärmeleithülse wird der Durchströmungsquerschnitt des Leitungsverbinders in diesem Bereich stark verringert. Wird ein wärmeleitfähiges oder wärmeleitendes Hülsenelement direkt bei der Herstellung des Leitungsverbinders mit in diesen integriert, um eine Wärmeleitfähigkeit vorzusehen und ein Beheizen des Leitungsverbinders in dem Bereich, der von dem Medium durchströmt wird, kann der Innendurchmesser eines solchen Hülsenelementes so groß gewählt werden, wie dies auch ansonsten als Innendurchmesser der Durchgangsöffnung durch den Leitungsverbinder zum Durchführen von Medium vorgesehen ist. Außerhalb des Rahmens der Erfindung kann eine dünnwandige Metallhülse, die also den Innendurchmesser der Durchgangsöffnung durch den Leitungsverbinder zum Durchströmen von Medium nur geringfügig verengt und die aufgrund der Verwendung von Metall eine hohe Leitfähigkeit aufweist, verwendet werden, z.B. eine Hülse aus Edelstahl oder Aluminium. Edelstahl eignet sich besonders für die Verwendung bei Brennstoffzellen, bei denen als Medium deionisiertes Wasser durch Leitungsverbinder und Medienleitung strömt. Da Edelstahl allerdings schwer zu bearbeiten ist, wird grundsätzlich Aluminium bevorzugt. Bei Aluminium tritt jedoch das Problem von Korrosion und das Erfordernis des Vorsehens eines Korrosionsschutzes auf. Um dieses Problem zu lösen, kann eine Beschichtung mit Korrosionsschutzmittel vorgesehen werden. Hierdurch wird eine solche Metallhülse allerdings teuer und schwieriger herzustellen. Aus diesem Grunde kann insbesondere ein Hülsenelement aus Aluminium verwendet werden. Dabei ist es möglich, eine solche Aluminiumhülse bei der Herstellung des Leitungsverbinders in diesen einzupressen oder einzulegen, also die Aluminiumhülse in den Leitungsverbinder fest zu integrieren. Der Durchflussdurchmesser bzw. Durchströmungsdurchmesser zum Durchströmen mit Medium wird bei Vorsehen einer solchen Aluminiumhülse aufgrund deren Dünnwandigkeit kaum verringert. Erfindungsgemäß ist das Hülsenelement aus einem wärmeleitfähigen oder wärmeleitenden Kunststoff ausgebildet und bei der Herstellung des Leitungsverbinders in diesen als Zweikomponenten-Spritzgussteil integriert. Der Leitungsverbinder ist als Zweikomponenten-Spritzgussteil ausgebildet, wobei zumindest ein Teil leitfähig ausgebildet ist. Ein Anschlussabschnitt zum Verbinden mit der Medienleitung ist vorteilhaft lasertransparent ausgebildet. Da wärmeleitfähige Werkstoffe üblicherweise nicht laserschweißbar sind, erweist es sich als sehr vorteilhaft, bei Vorsehen eines Mehr- bzw. Zweikomponententeils den Teil, der zum Anschluss der Medienleitung oder anderer Aggregate vorgesehen ist, lasertransparent auszubilden, um dort eine Verbindung über Laserschweißen zu ermöglichen.

Weiter vorteilhaft umfasst der Leitungsverbinder eine Isolationseinrichtung zum thermischen und/oder elektrischen Isolieren, insbesondere ist der Leitungsverbinder zumindest teilweise von zumindest einer ein Luftvolumen zur thermischen Isolation einschließenden Isolations- und/oder Schutzeinrichtung bzw. Schutzkappe umgeben und/oder im Bereich eines Verbindungsabschnitts zum Verbinden mit einem Stecker oder der Medienleitung ist eine Isolationseinrichtung zum außenseitigen thermischen Isolieren vorgesehen, insbesondere ein Befestigungsclip, der ein Luftvolumen oder einen Luftspalt zum Leitungsverbinder einschließt. Beispielsweise kann einen Verbindungs- oder Kupplungsabschnitt außenseitig zumindest teilweise umgebend ein Befestigungsclip gemäß der WO 2006/018384 A1 angeordnet werden. Zur thermischen Isolation dient ein Luftspalt oder eingeschlossenes Luftvolumen zwischen dem Leitungsverbinder und der Isolationseinrichtung. Durch das Vorsehen einer oder mehrerer Isolationseinrichtungen können Wärmeverluste im Bereich des Leitungsverbinders eingeschränkt oder sogar unterbunden werden. Isolations- und/oder Schutzeinrichtung bzw. Schutzkappe und Befestigungsclip können auch selbst aus einem isolierenden Material bestehen. Ferner ist eine Kapselung als außenseitiger Schutz des Leitungsverbinders und seiner Anschluss- bzw. Verbindungsabschnitte gegen mechanische und, je nach Materialwahl, auch gegen chemische Beschädigung möglich. Als Kapselung kann eine Umspritzung des Leitungsverbinders, insbesondere gesamtheitliche Umspritzung, mit einem Außengehäuse vorgesehen werden. Ferner kann als Kapselung ein sog. Schrumpfschlauch, Gewebeschlauch oder dergleichen vorgesehen werden. Bei Vorsehen der Kapselung kann zwischen dem Leitungsverbinder und der Kapselung ein Luftvolumen eingeschlossen werden, wodurch eine gute Wärmeverteilung und eine gute thermische Isolation gegenüber der Umgebung, also nach außen, erzielt werden kann.

Der Leitungsverbinder kann ferner so ausgebildet sein, dass mittels einer Einrichtung zur Wärmeeinkopplung Wärme in radialer Richtung in den Leitungsverbinder eingekoppelt werden kann, insbesondere im Verbindungsbereich mit der Medienleitung. Hierbei wird beispielsweise durch ein oder mehrere Heizelemente Wärme in den Mantel der Medienleitung eingekoppelt, axial über deren Mantel bis zum Ende der Medienleitung transportiert und in dem Bereich des Leitungsverbinders, in den das Ende der Medienleitung eingefügt ist, radial aus dem Mantel der Medienleitung in den Leitungsverbinder eingekoppelt. Diese eingekoppelte Wärme kann insbesondere bei Vorsehen einer höheren Wärmeleitfähigkeit des Materials des Leitungsverbinders im Vergleich zum Material der Medienleitung schnell innerhalb von diesem weitergeleitet werden, so dass eine Beheizung des Leitungsverbinders über die Medienleitung möglich ist. Zum axialen Wärmetransport innerhalb des Leitungsverbinders ist dieser vorteilhaft mit einer Wandstärke von 1 bis 20 mm versehen, insbesondere mit einer Wandstärke von 2 bis 5 mm.

Der Leitungsverbinder kann mit zumindest einem Befestigungselement und/oder Führungselement zum außenseitigen Anordnen von Heizelementen und zum Verbessern der Wärmeeinleitung versehen sein oder werden, insbesondere mit einer Rippenstruktur. Mittels solcher Befestigungselemente bzw. Führungselemente bzw. einer solchen Rippenstruktur können Heizelemente auf der Außenseite des Leitungsverbinders gezielt dort in ihrer Position fixiert werden, wo sie mit Kaltleitern bzw. einer elektrischen Zuführleitung verbunden werden können bzw. wo eine außenseitige Umwicklung des Leitungsverbinders mit Heizelementen erfolgen soll. Die Wärmeeinkopplung erfolgt in diesem Falle von den außenseitig um zumindest einen Teil des Leitungsverbinders angeordneten über das wärmeleitfähige Material in das Innere des Leitungsverbinders hinein bzw. zu den Abschnitten des Leitungsverbinders, die beheizt werden sollen und daher mit der wärmeleitfähigen oder wärmeleitenden Einrichtung versehen bzw. aus wärmeleitfähigem oder wärmeleitendem Material ausgebildet sind.

Auch die Medienleitung ist vorteilhaft mit zumindest einem Heizelement versehen, insbesondere zumindest einem sich durchgängig entlang der Medienleitung erstreckenden Heizelement. Insbesondere ist die Medienleitung mit zumindest einem Heizdraht, insbesondere zwei Heizdrähten zumindest teilweise versehen. Das Heizelement bzw. der zumindest eine Heizdraht können außen- und/oder innenseitig bezüglich der Medienleitung angeordnet sein/werden. Ferner ist auch ein Anordnen im Mantel der Medienleitung in einer oder mehreren Schichten desselben möglich. Die Medienleitung bzw. der Mantel der Medienleitung kann insbesondere zumindest eine Schicht aus einem elektrisch leitfähigen und/oder elektrisch und/oder thermisch leitenden Kunststoff enthalten. Die Schicht bzw. wärmeerzeugende Schicht kann Heizelemente zum Beheizen des Kunststoffmaterials aufweisen, somit ist ein Beheizen der Schicht direkt möglich. Bei Vorsehen einer solchen leitfähigen oder leitenden Schicht im Mantel der Medienleitung sind vorteilhaft Kontaktierungselemente vorgesehen, insbesondere durch den Mantel der Medienleitung nach außen geführt, um dort eine Zufuhr elektrischer Energie vorsehen zu können. Insbesondere können dort Kaltleiter angeschlossen werden, die ihrerseits an eine elektrische Energiequelle angeschlossen werden. Für den Leitungsverbinder kann eine Zufuhr elektrischer Energie im Bereich eines Anschlussabschnitts, insbesondere steckerartigen bzw. Leitungsanschlussabschnitts und/oder eines Kupplungsabschnitts erfolgen. Vorteilhaft erfolgt dort die Energiezufuhr sowohl für die Medienleitung als auch für den Leitungsverbinder. Beispielsweise sind die Enden der Heizelemente, die zum Beheizen der Medienleitung vorgesehen sind und die zum Beheizen des Leitungsverbinders vorgesehen sind, geeignet konnektiert und die Verbindungsstellen innerhalb der Isolations- und/oder Schutzeinrichtung geschützt aufgenommen.

Insbesondere im Bereich des Leitungsverbinders kann zumindest eine Heizlitze angeordnet werden, insbesondere ein, zwei oder vier Heizlitzen. Bei Vorsehen einer Heizlitze erstreckt sich diese vorteilhaft durchgängig entlang der Medienleitung und dem zumindest einen Leitungsverbinder, beginnt also an dem einen Leitungsverbinder, erstreckt sich entlang der Medienleitung bis zum anderen Leitungsverbinder, ggf. über diesen hinweg, zurück zu dem ersten Leitungsverbinder, ist somit doppelt gelegt innenseitig, außenseitig und/oder im Mantel der Medienleitung entlang von dieser geführt. Bei Vorsehen zweier Heizlitzen erstrecken sich vorteilhaft beide entlang der Medienleitung und vorteilhaft ist zumindest eine der beiden Heizlitzen zum Umwickeln des Leitungsverbinders vorgesehen. Bei Vorsehen von vier Heizlitzen erstrecken sich vorteilhaft zwei Heizlitzen entlang der Medienleitung und zwei Heizlitzen sind zum Umwickeln der Leitungsverbinder vorgesehen. Die eine den Leitungsverbinder umgebende Heizlitze wird mit einer der beiden sich entlang der Medienleitung erstreckenden Heizlitzen verbunden. Die andere sich entlang der Medienleitung erstreckende Heizlitze sowie das andere Ende der den Leitungsverbinder zumindest teilweise umgebenden Heizlitze werden an die elektrische Energiezufuhr, insbesondere Kaltleiter, angeschlossen. Die beiden sich entlang der Medienleitung ersteckenden Heizlitzen können somit an ihren Enden miteinander und/oder mit einer weiteren Heizlitze bzw. Kaltleitern für die Energieversorgung verbunden sein. Entsprechend ist es sowohl bei Vorsehen zweier Heizlitzen als auch bei Vorsehen vierer Heizlitzen möglich, die Zufuhr elektrischer Energie lediglich im Bereich eines der beiden Leitungsverbinder, die endseitig an der Medienleitung angeordnet sind, vorzusehen.

Ferner kann an dem einen Leitungsverbinder eine andere Anzahl von Heizlitzen als an dem anderen angeordnet sein oder werden. Beispielsweise kann der eine Leitungsverbinder mit zwei Heizlitzen versehen sein und der andere mit vier Heizlitzen, wobei jeweils zwei Heizlitzen bei jedem der Leitungsverbinder zum Umwickeln derselben dienen. Durch das Vorsehen einer unterschiedlichen Anzahl von Heizlitzen oder allgemein Heizelementen an den beiden Leitungsverbindern der konfektionierten Medienleitung können unterschiedliche Wärmemengen in die Leitungsverbinder eingebracht werden.

Als Material für den zumindest teilweise aus wärmeleitfähigem und wärmeleitendem Material bestehenden Leitungsverbinder eignet sich insbesondere ein wärmeleitfähiges Material mit einer Bruchdehnung von 1 bis 10 %, insbesondere mit einer Bruchdehnung von ≥ 2 % und mit einer Zugfestigkeit von mehr als 50 MPa, insbesondere mehr als 80 MPa. Als besonders vorteilhaft erweist es sich, einen mineralischen Füllstoff, insbesondere Langglasfasern mit einem Durchmesser von > 0,2 mm vorzusehen. Ebenfalls können Kurzfasern verwendet werden. Beispielsweise kann als Füllstoff ein Material auf Kohlenstoffbasis, insbesondere Graphit, verwendet werden. Bei Verwendung von Langglasfasern ist bei einem Polymerwerkstoff eine Zugfestigkeit von über 140 MPa bei einer Bruchdehnung von 2 % möglich. Bei Verwendung von Kurzglasfasern kann beispielsweise ein Polymerwerkstoff mit einer Wärmeleitfähigkeit von 5 W/(m·K) vorgesehen werden, der eine Zugfestigkeit von etwa 70 MPa und eine Bruchdehnung von unter 1 % aufweist, wobei als Füllstoff ein Material auf Kohlenstoffbasis verwendet wird. Die Verwendung von Kurzfasern führt allerdings zu einem nahezu doppelt so teuren Kunststoffmaterial im Vergleich zur Verwendung von Langglasfasern, so dass im Hinblick auf eine Kostenersparnis die Verwendung von Langglasfasern bevorzugt wird, insbesondere auch im Hinblick auf die mögliche höhere Zugfestigkeit. Im Hinblick auf einen dauerhaften Kontakt mit einer wässrigen Harnstofflösung, wie AdBlue^{®}, eignet sich als Füllstoff ein mineralisches Material bzw. ein Material auf mineralischer Basis, das eine ausreichende Stabilität gegenüber einer Dauerbeanspruchung mit diesem Stoff aufweist.

Zur näheren Erläuterung der Erfindung werden im Folgenden Ausführungsbeispiele von dieser näher anhand der Zeichnungen beschrieben. Diese zeigen in:
- Figur 1: zeigt eine Querschnittsansicht durch eine erste Ausführungsform eines erfindungsgemäßen Leitungsverbinders,
- Figur 2: eine Querschnittsansicht durch eine zweite Ausführungsform eines erfindungsgemäßen Leitungsverbinders,
- Figur 3: eine Querschnittsansicht durch eine dritte Ausführungsform eines erfindungsgemäßen Leitungsverbinders,
- Figur 3a: eine Längsschnittansicht einer weiteren Ausführungsform eines erfindungsgemäßen Leitungsverbinders mit außenseitiger Rippenstruktur zum Einlegen von Heizelementen,
- Figur 3b: eine Querschnittsansicht des Leitungsverbinders gemäße Figur 3a,
- Figur 4: eine Querschnittsansicht durch eine vierte Ausführungsform eines erfindungsgemäß Leitungsverbinders,
- Figur 5: eine Seiten- und teilweise Querschnittsansicht durch eine konfektionierte Medienleitung mit erfindungsgemäßen Leitungsverbindern in fünfter Ausführungsform,
- Figur 6: eine seitliche skizzenhafte Ansicht eines erfindungsgemäßen Leitungsverbinders mit angefügter beheizbarer Medienleitung, wobei eine vier Heizlitzen umfassende konfektionierte Medienleitung unter Verwendung dieser Heizelementeanordnung ausgebildet werden kann,
- Figur 7: eine seitliche skizzenhafte Ansicht eines erfindungsgemäßen Leitungsverbinders mit angefügter beheizbarer Medienleitung, wobei eine zwei Heizlitzen umfassende konfektionierte Medienleitung unter Verwendung dieser Heizelementeanordnung ausgebildet werden kann,
- Figur 8: eine Seitenansicht einer erfindungsgemäßen konfektionierten Medienleitung unter Verwendung der zweier endseitiger Leitungsverbinder , von denen einer ein gerader Leitungsverbinder ist und einer ein abgewinkelter,
- Figur 9: eine Seitenansicht einer erfindungsgemäßen konfektionierten Medienleitung unter Verwendung des Leitungsverbinders gemäß Figur 6 und des in Figur 3 im Schnitt und in Figur 10 gezeigten Leitungsverbinders,
- Figur 10: eine seitliche teilgeschnittene Ansicht des Leitungsverbinders gemäß Figur 3, ohne Befestigungsclip, jedoch mit Kapselung,
- Figur 11: eine Detailansicht der Medienleitung gemäß Figur 9, und
- Figur 12: eine seitliche skizzenhafte Ansicht des radialen Wärmeübergangs von der Medienleitung in einen erfindungsgemäßen Leitungsverbinder.

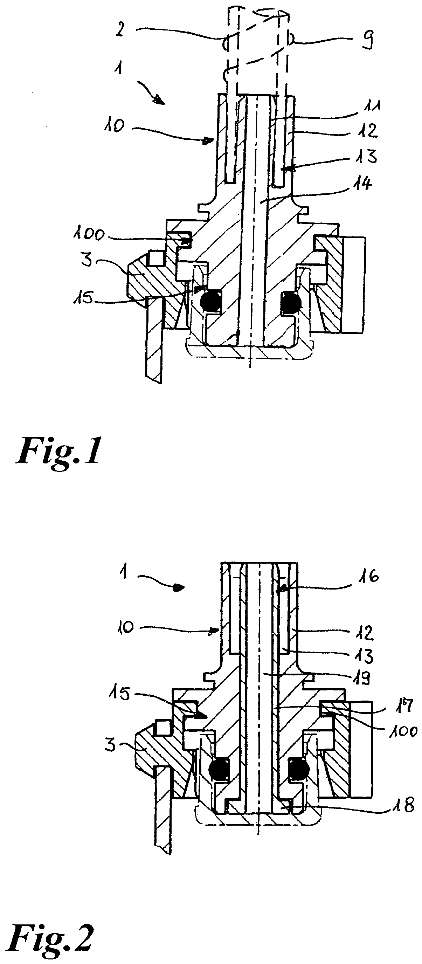

In Figur 1 ist eine Querschnittsansicht eines Leitungsverbinders 1 gezeigt, der gesamtheitlich aus einem wärmeleitfähigen Material besteht. Der Leitungsverbinder 1 ist gerade ausgebildet. Er weist einen Leitungsanschlussabschnitt 10 und einen Kupplungsabschnitt 15 auf. Der Leitungsanschlussabschnitt 10 des Leitungsverbinders weist einen inneren hülsenförmigen steckerartigen Teil 11 sowie einen diesen außenseitig umgebenden, mit Abstand zu diesem angeordneten äußeren hülsenförmigen Teil 12 auf. Die Wandung einer gestrichelt angedeuteten Medienleitung 2 wird in den Zwischenraum 13 zwischen dem hülsenförmigen steckerartigen Teil 11 und dem äußeren hülsenförmigen Teil 12 eingesteckt. Die Medienleitung 2 ist über Heizelemente 9 beheizbar, wobei in der gezeigten Ausführungsform die Erwärmung des Leitungsverbinders 1 durch Wärmeübergang von der beheizten Medienleitung 2 über den Leitungsanschlussabschnitt 10 auf den Leitungsverbinder 1 erfolgt. Zu diesem Zweck besteht der in Figur 1 gezeigte Leitungsverbinder aus einem wärmeleitfähigem Material, das Wärme besser leitet als das Material der Medienleitung 2. Hierdurch ist ein Erwärmen des Leitungsverbinder 1 durch Wärmeübergang von der Medienleitung 2 auf den Leitungsverbinder 1 sehr gut möglich. Ein durch eine innere Durchgangsöffnung 14 des Leitungsverbinders 1 strömbares Medium kann somit vor einem Einfrieren geschützt bzw. wieder aufgetaut werden, sofern dieses innerhalb der Medienleitung 2 und dem Leitungsverbinder 1 strömende Medium eingefroren sein sollte.

An dem Kupplungsabschnitt 15 kann beispielsweise ein Aggregat angekoppelt werden. Dies ist in Figur 1 lediglich durch gestrichelte Linien angedeutet. Die innere Durchgangsöffnung 14 erstreckt sich durch den Leitungsanschlussabschnitt 10 und den Kupplungsabschnitt 15 hindurch. Zum außenseitigen Isolieren des Kupplungsabschnitts 15 des Leitungsverbinders 1 und zum Verbinden des Leitungsverbinder 1 mit einem Aggregat bzw. einem Aggregatstecker ist ein Befestigungsclip 3 vorgesehen. Dieser dient zum Halten des auf den Kupplungsabschnitt 15 aufgefügten Aggregatsteckers und zum außenseitigen thermischen Isolieren des Kupplungsabschnitts, um die Wärmeverluste hier möglichst gering zu halten, damit auch dieser Kupplungsabschnitt ausreichend warm gehalten werden und so ein Einfrieren des durch die innere Durchgangsöffnung 14 strömenden Mediums verhindert bzw. dieses nach eventuellem Einfrieren wieder aufgetaut werden kann.

In Figur 2 ist eine weitere Ausführungsform des Leitungsverbinders 1 gezeigt. Bei dieser Ausführungsvariante ist, im Unterschied zu der Ausführungsform nach Figur 1, der Leitungsverbinder 1 mit einem fest in diesem montierten wärmeleitenden Hülsenelement 16 versehen. Dieses umfasst einen hülsenförmigen steckerartigen Teil 17 und einen auskragenden flanschartigen Teil 18. Es erstreckt sich durch die gesamte Längserstreckung des Leitungsverbinders 1 hindurch von dem Ende des Leitungsanschlussabschnitts 10 bis zum gegenüberliegenden Ende des Kupplungsabschnitts 15. Der flanschartige Teil 18 des Hülsenelements 16 kragt dort, also in dem Bereich, in dem ein Anschluss an einen Aggregatstecker bzw. ein Aggregat etc. möglich ist, tellerartig oder flanschartig aus, so dass dort stirnseitig eine bessere Wärmeeinkopplung möglich ist. Der Leitungsverbinder ist als Zweikomponenten-Spritzgussteil ausgebildet, wobei das wärmeleitende oder wärmeleitfähige Hülsenelement 16 den einen Teil bildet und der übrige Körper des Leitungsverbinders 1 den anderen Teil. Da das Hülsenelement 16 direkt bei der Herstellung des Leitungsverbinders 1 mit in diesen integriert wird, ist die innere Durchgangsöffnung 19 in dem Hülsenelement mit einem dem Durchmesser der inneren Durchgangsöffnung 14 bei der Ausführungsform des Leitungsverbinders 1 nach Figur 1 entsprechenden inneren Durchmesser versehen. Im Unterschied zum nachträglichen Einfügen einer separaten Wärmeleithülse in einen bestehenden Leitungsverbinder, bei dem der Durchmesser der inneren Durchgangsöffnung um die doppelte Wandstärke der Wärmeleithülse reduziert wird, ist dies bei dem Vorsehen des wärmeleitenden oder wärmeleitfähigen Hülsenelements 16 nicht der Fall, da die Wandstärke des Hülsenelements 16 bei der Herstellung des Leitungsverbinders 1 bereits mit berücksichtigt werden kann bzw. wird.

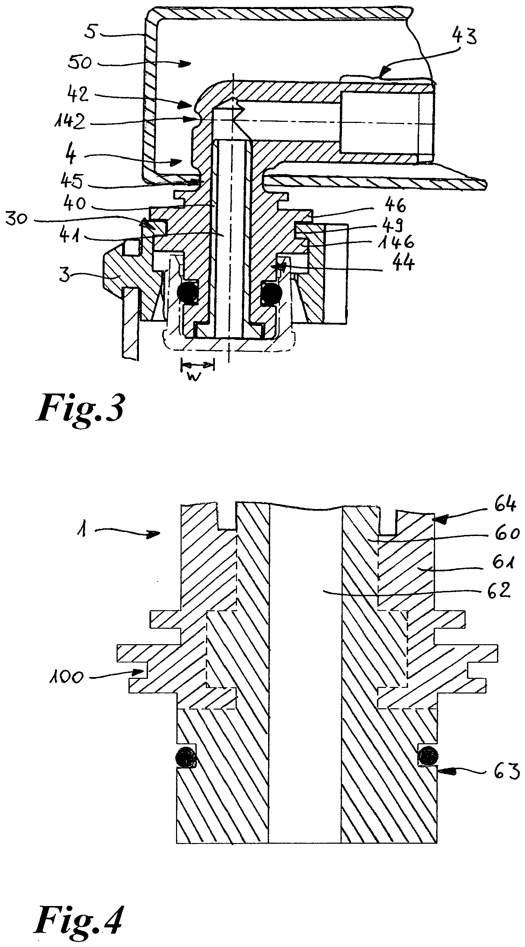

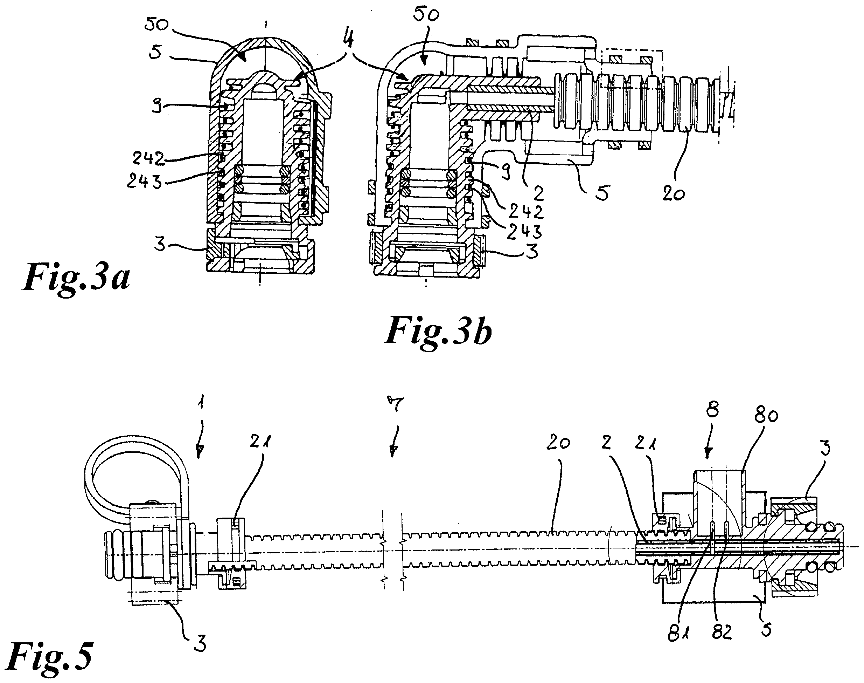

In Figur 3 ist eine weitere Ausführungsform eines erfindungsgemäßen Leitungsverbinders gezeigt, der, im Unterschied zu den Ausführungsformen nach Figur 1 und 2 als gewinkelter Leitungsverbinder 4 ausgebildet ist. Auch dieser weist, wie die Ausführungsform des Leitungsverbinders 1 gemäß Figur 2, ein wärmeleitendes Hülsenelement 40 auf, so dass es nicht erforderlich ist, dass der übrige Körper des Leitungsverbinders 4 aus einem wärmeleitenden oder wärmeleitfähigen Material besteht. Zum Erwärmen eines innerhalb der inneren Durchgangsöffnung 41 strömenden Mediums ist bereits das Beheizen des wärmeleitenden bzw. wärmeleitfähigen Hülsenelements 40 ausreichend. Das wärmeleitende Hülsenelement 40 endet in einem Winkelabschnitt 42 des Leitungsverbinders 4, wobei dies ausreichend ist, um eine Erwärmung von durch den Leitungsverbinder 4 strömendem Medium zu ermöglichen und ein Einfrieren von diesem zu verhindern bzw. um dieses nach einem Einfrieren auftauen zu können. Das Hülsenelement 40 ragt vorzugsweise bis in den Bereich des Leitungsverbinders hinein, der von einem Heizleiter bzw. Heizelement umwickelt ist/wird. Anstelle der geraden endseitigen Ausbildung des Hülsenelements 40, wie dies in Figur 3 gezeigt ist, kann dieses auch endseitig schräg ausgebildet, also mit einem endseitigen Fasenschnitt versehen, sein oder länger ausgebildet werden als dies in Figur 3 gezeigt ist.

Ein sich an den Winkelabschnitt 42 anschließender Leitungsanschlussabschnitt 43 des Leitungsverbinders 4 ist in dieser Ausführungsvariante lasertransparent, um in diesem Bereich ein Verbinden unter Verwendung eines Lasers zu ermöglichen. Der Leitungsanschlussabschnitt 43 ist in Figur 3 der Bereich, in dem der Bohrungsteil der gestuften Bohrung mit dem größeren Durchmesser liegt, in den das Ende der Medienleitung 2 eingeschoben und darin befestigt wird. Auch der äußere hülsenförmige Teil 12 des Leitungsanschlussabschnitts 10 des Leitungsverbinders 1 gemäß Figur 1 ist bevorzugt lasertransparent ausgebildet, um den Einsatz eines Lasers zum Verbinden mittels Laserschweißens hier zu ermöglichen. Da wärmeleitfähige Materialien, insbesondere Kunststoffe, üblicherweise nicht lasertransparent sind, wird für den Leitungsanschlussabschnitt 43 des Leitungsverbinders 4 gemäß Figur 3 bzw. den äußeren hülsenförmigen Teil 12 des Leitungsanschlussabschnitts 10 des Leitungsverbinders 1 ein anderes Material, nämlich ein lasertransparentes Material, verwendet, wobei auch hier ein Zweikomponenten-Spritzgussteil gefertigt werden kann.

Zum Isolieren und zum äußeren Schutz auch des mit dem Leitungsanschlussabschnitt 43 versehenen Abschnitts des abgewinkelten Leitungsverbinders 4 kann dieser mit einer Kapselung 5 außenseitig versehen sein oder werden, wobei zwischen Kapselung 5 und Leitungsverbinder 4 ein Luftspalt 50 verbleibt, also ein Luftvolumen eingeschlossen wird, das der Isolierung dient. Dies ist in Figur 3 angedeutet. Derartige Kapselungen 5 können insbesondere als zwei Halbschalen ausgebildet sein, um ein problemloses Montieren nach dem Zusammenfügen von Leitungsverbinder und Medienleitung zu ermöglichen. Ferner ist z.B. das Ausbilden als Umspritzung des Leitungsverbinders oder in Form einer Schrumpfschlauch- bzw. Gewebeschlauchummantelung möglich.

Auch bei der Ausführungsform des Leitungsverbinders 4 nach Figur 3 ist ein Kupplungsabschnitt 44 von dem Befestigungsclip 3 zumindest größtenteils umgeben, um hier einerseits ein Befestigen beispielsweise eines Steckers eines Aggregats oder dergleichen und andererseits eine außenseitige thermische Isolation des Kupplungsabschnitts 44 zu ermöglichen.

Im Übergangsbereich von Kupplungsabschnitt zum Winkelabschnitt 42 ist ein Zentrieransatz 45 ausgebildet, der sich aufgrund der Winkelform des Leitungsverbinders 4 als sehr hilfreich für die Montage der verschiedenen Komponenten an dem Leitungsverbinder 4 erweist. Ferner sind außenseitig auf dem Leitungsverbinder 4 Einrichtungen zum Fixieren und/oder zur Führung der Heizelemente vorgesehen, von denen in Figur 3 beispielhaft eine Nut 142 am Winkelabschnitt 42 gezeigt ist. In diese Nut 142 kann ein Heizelement eingelegt werden, um gezielt an gewünschten Stellen Wärme von außen in den Leitungsverbinder einkoppeln zu können. Mittels einer Einrichtung zum Fixieren der Heizelemente werden diese an dem Leitungsverbinder befestigt, in eine Einrichtung zum Führen lediglich lose eingelegt.

Die Figuren 3a und 3b zeigen eine außenseitige Rippenstruktur mit einzelnen Rippen 242 und dazwischen angeordneten Nuten 243 als Führungseinrichtungen, in die Heizelemente 9 eingelegt sind. Besonders gut ist in diesen Figuren auch der Luftspalt 50 bzw. das Luftvolumen zwischen Leitungsverbinder 4 und Kapselung 5 zu erkennen, der bzw. das die eigentliche Isolierung bewirkt.

Die Wandstärke w des Leitungsverbinders insbesondere im Kupplungsbereich kann 2 bis 5 mm betragen, wobei die größte Wandstärke im Bereich einer flanschartigen Auskragung 46 beispielsweise bei 20 mm liegt. An der flanschartigen Auskragung 46 stützt sich ein Befestigungsabschnitt 30 des Befestigungsclips 3 ab, der in einer Nut 49 des Kupplungsabschnitts 44 angeordnet wird. Die Nut wird zwischen der Auskragung 46 und einer hierzu beabstandeten Auskragung 146 gebildet.

Die Befestigungsclips 3 können vollumfänglich um den jeweiligen Kupplungsabschnitt des Leitungsverbinders herum angeordnet oder c-förmig ausgebildet werden, so dass sie lediglich einen Teilbereich der jeweiligen Kupplungsabschnitte umgeben. Zum Verrasten an den jeweiligen Leitungsverbinder kann eine Befestigungsspur, insbesondere die bereits genannte Nut, vorgesehen werden. In den Figuren 1 bis 4 ist eine solche Befestigungsnut 100 bzw. 49 gezeigt, in die der Befestigungsabschnitt 30 des jeweiligen Befestigungsclips 3 eingreift.

Figur 4 zeigt eine skizzenhafte Querschnittsansicht durch eine weitere Ausführungsform eines erfindungsgemäßen Leitungsverbinders 1. Der hier in Figur 4 skizzierte Leitungsverbinder ist als Zweikomponententeil ausgebildet und weist einen inneren wärmeleitfähigen Teil 60 sowie einen äußeren thermisch isolierenden Teil 61 auf. Der wärmeleitfähige Teil erstreckt sich im Inneren des Leitungsverbinders und umfasst eine innere Durchgangsöffnung 62, durch die zu beheizendes Medium hindurchströmen kann. Der äußere isolierende Teil 61 erstreckt sich in dem Bereich des Leitungsverbinders, der zum Verbinden bzw. Zusammenstecken mit einer Medienleitung vorgesehen ist. Der innere wärmeleitfähige Teil 60 erstreckt sich auch auf die Außenseite des Leitungsverbinders 1 und bildet einen Kupplungsabschnitt 63. Diesen umgebend kann wiederum ein Befestigungsclip 3 angeordnet werden, um eine Isolation nach außen vorzusehen. Dies ist in Figur 4 jedoch nicht gezeigt. Der in Figur 4 nur teilweise gezeigte Anschlussbereich 64 zum Anschließen der Medienleitung ist vorteilhaft lasertransparent, somit insbesondere das Material des äußeren insolierenden Teils 61. Hierdurch ist ein Einsatz eines Lasers zum Befestigen der Medienleitung an dem Leitungsverbinder 4 möglich.

Figur 5 zeigt eine Seitenansicht und teilweise Schnittansicht einer konfektionierten Medienleitung 7. Diese umfasst zwei Leitungsverbinder 1, 8 sowie die mit diesen verbundene Medienleitung 2. Die Medienleitung 2 ist von einem Wellrohr 20 umgeben. Im Befestigungsbereich des Wellrohrs an den beiden Leitungsverbindern 1, 8 sind Befestigungsclips 21 angeordnet. Ferner sind an beiden Leitungsverbindern 1, 8 Befestigungsclips 3 angeordnet, wobei der an dem Leitungsverbinder 8 angeordnete Befestigungsclip 3 geschnitten dargestellt ist und der an dem Leitungsverbinder 1 angeordnete Befestigungsclip 3 in der Seitenansicht gezeigt ist. Letzterer ist c-förmig ausgebildet, wie Figur 5 entnommen werden kann.

Der Leitungsverbinder 8 gemäß Figur 5 weist einen seitlich abzweigenden Anschlussabschnitt 80 auf. In diesen ragen stiftartige Elemente 81, 82 als elektrische Kontakte für einen Stromanschluss hinein. Die Stifte 81, 82 sind mit dem Mantel 22 der Medienleitung 2 verbunden bzw. mit den hierin geführten Heizelementen bzw. einer wärmeleitfähigen Schicht der Medienleitung 2. Hierüber ist Anschluss an Heizleiter bzw. Kaltleiter im Inneren des Anschlussabschnitts 80 möglich.

Insbesondere der den Anschlussabschnitt 80 umfassende Teil des Leitungsverbinders 8 kann, wie in Figur 5 angedeutet, von einer Kapselung 5 umgeben sein bzw. werden, um eine Isolation und zugleich einen äußeren Schutz vorzusehen. Wie in Figur 5 angedeutet, kann auch ein Teil des Befestigungsclips 21 in der Kapselung 5 aufgenommen werden.

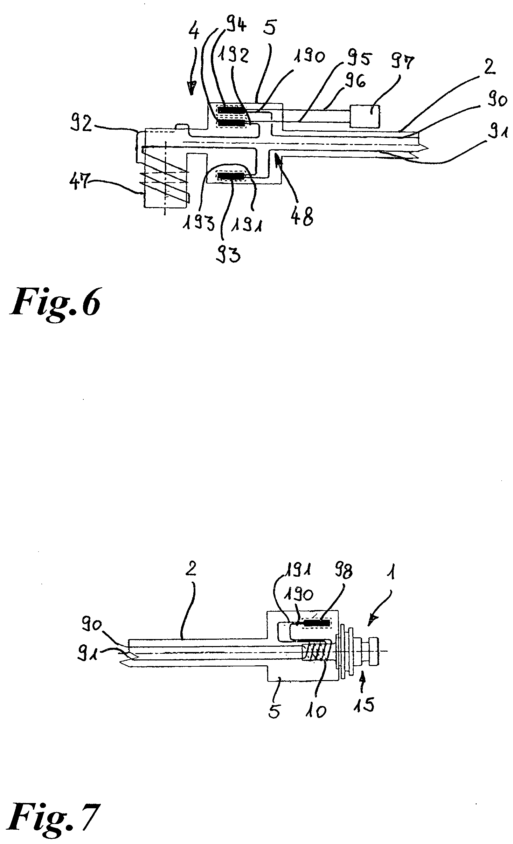

Die Figuren 6 und 7 zeigen mögliche Ausführungsvarianten der Beheizung von gewinkelten und geraden Leitungsverbindern, also der Wärmezufuhr sowie der Anordnung der hierzu vorgesehenen Heizlitzen innerhalb der Leitungsverbinder. Gemäß Figur 6 sind drei Heizlitzen innerhalb des Leitungsverbinders 4 bzw. der Kapselung 5 angeordnet. Zwei Heizlitzen 90, 91 erstrecken sich entlang der Medienleitung 2 in den Leitungsverbinder 4 bzw. die Kapselung 5, insbesondere Schutzkappe, hinein. Eine weitere Heizlitze 92 ist um einen Kupplungsabschnitt 47 des Leitungsverbinders 4 herumgewickelt, um diesen beheizen zu können, und zu einem Anschlussabschnitt 48 des Leitungsverbinders 4 geführt. Die jeweiligen Enden 192, 193 der Heizlitze 92 sind mit der Heizlitze 91 bzw. deren Ende 191 und einem Kaltleiter 95 an den Verbindungs- bzw. Crimpstellen 93, 94 verbunden. Das Ende 190 der ersten Heizlitze 90, die durch die Medienleitung 2 geführt wird, ist mit einem zweiten Kaltleiter 96 verbunden. Die beiden Kaltleiter 95, 96 sind zu einem Stecker 97 geführt, der in eine elektrische Energieversorgungseinrichtung eingesteckt werden kann.

Es sind auch andere Verschaltungen der Heizlitzen zum elektrischen Kontaktieren von diesen möglich.

Wie Figur 7 zu entnehmen ist, sind hier die beiden Heizlitzen 90, 91 zunächst entlang der Medienleitung 2 geführt, nachfolgend innerhalb des Leitungsverbinders 1 um den Leitungsanschlussabschnitt 10 herum gewendelt, wobei beide Heizlitzen 90, 91 um den Steckabschnitt herum gewendelt angeordnet sind. Beide Heizlitzen 90, 91 sind innerhalb der Kapselung 5, die den Leitungsverbinder 1 umgibt, miteinander verbunden, insbesondere gecrimpt. Dies ist durch eine Verbindungs- bzw. Crimpstelle 98 in Figur 7 angedeutet. Hier ist kein Anschluss an eine elektrische Energieversorgung vorgesehen. Diese kann im Bereich des gegenüberliegenden anderen Leitungsverbinders erfolgen.

Die in den Figuren 6 und 7 gezeigten Verbindungs- bzw. Crimpstellen 93, 94, 98 können jeweils durch einen Schrumpfschlauch umhüllt und dadurch nach außen abgedichtet und geschützt werden. Ferner ist es möglich, die Verbindungs- bzw. Crimpstellen 93, 94, 98 mit einer Masse zu umspritzen, welche Vorgehensweise sich besonders bei höheren Temperaturanforderungen an die Medienleitung eignet. Insbesondere werden die Verbindungs- bzw. Crimpstellen 93, 94, 98 in einem Spritzverfahren mit zumindest einem Kunststoff, vorteilhaft einem Thermoplasten, umspritzt. Die Verbindungs- bzw. Crimpstellen 93, 94, 98 können hierbei in eine Spritzform eines Spritzgusswerkzeugs eingelegt werden, die zumindest einen federbelasteten Stift zur Führung und/oder Positionierung der Verbindungs- bzw. Crimpstelle aufweist, damit diese die Wand des Spritzgusswerkzeugs bzw. der Spritzform nicht berührt. Beim Füllen der Spritzform mit dem Thermoplasten unter Druck wird der federbelastete Stift zurückgeschoben und die Verbindungs- bzw. Crimpstelle 93, 94, 98 vollständig mit der thermoplastischen Masse umhüllt. Derartige und ähnliche Spritzgusswerkzeuge und Verfahren zu deren Anwendung sind im Stand der Technik bekannt.

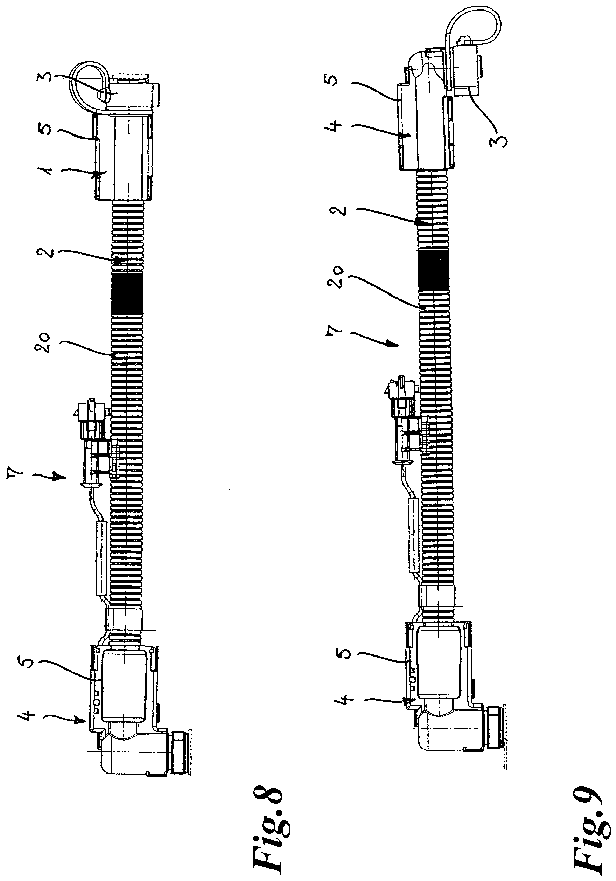

Figur 8 zeigt eine Kombination eines geraden Leitungsverbinders, wie des Leitungsverbinders 1 gemäß Figur 1, 2 oder 4, und eines gewinkelten Leitungsverbinders 4, wie z.B. in Figur 3 gezeigt, wobei die beiden Leitungsverbinder 1, 4 mit der Medienleitung 2, den Kapselungen 5 und einem Befestigungsclip 3 bereits fertig montiert als konfektionierte Medienleitung 7 gezeigt sind.

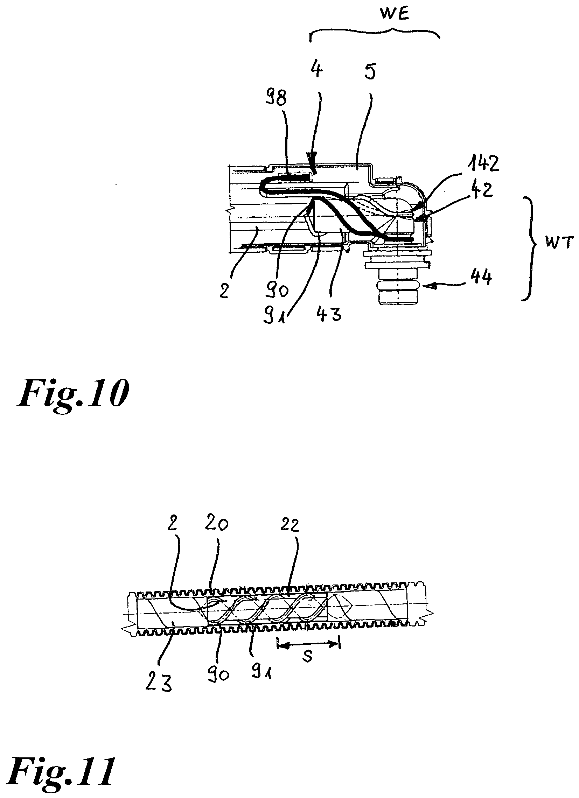

Bei der Ausführungsform der konfektionierten Medienleitung 7 gemäß Figur 9 ist anstelle des Leitungsverbinders 1 ein weiterer gewinkelter Leitungsverbinder 4 endseitig an der Medienleitung 2 vorgesehen. Dieser ist Figur 10 im Detail gezeigt, wobei die eine Schalenhälfte der als Schutzkappe ausgebildeten Kapselung 5 entfernt ist, um den Leitungsverbinder besser erkennen zu können. Ähnlich wie bei dem Leitungsverbinder gemäß Figur 7 sind auch hier die beiden Heizlitzen 90, 91 miteinander verbunden bzw. gecrimpt an der Verbindungsstelle 98. Wärme wird also hier außenseitig in den Leitungsverbinder 4 eingekoppelt, so dass eine Erwärmung der inneren Durchgangsöffnung durch den Leitungsverbinder hindurch möglich ist, um das darin strömende Medium erwärmen zu können. Außenseitig beheizt werden nur der Leitungsanschlussabschnitt 43 sowie der Winkelabschnitt 42, nicht jedoch der Kupplungsabschnitt 44. In diesen gelangt die Wärme durch Wärmeleitung aufgrund des Vorsehens eines wärmeleitfähigen oder wärmeleitenden Materials, wie zu den Figuren 1 bis 4 vorstehend beschrieben. Der Kupplungsabschnitt 44 des Leitungsverbinders 4 dient wiederum zum Verbinden mit einem Aggregatstecker etc., der dort aufgesteckt werden kann.

In Figur 11 ist das Detail der mit dem Wellrohr 20 ummantelten Medienleitung 2 gezeigt. Bei der in Figur 11 gezeigten Ausführungsvariante sind die Heizlitzen außenseitig um die Medienleitung 2 herum geführt. Zum Fixieren und/oder zum äußeren Schutz ist eine Umwicklung mit Klebe- bzw. Gewebeklebeband 23 vorgesehen. Dies ist in Figur 11 ebenfalls angedeutet.

Anstelle des Anordnens der Heizlitzen 90, 91 auf der Außenseite der Medienleitung, wie in Figur 11 angedeutet, können diese auch in dem Mantel 22 der Medienleitung angeordnet werden, so dass die Medienleitung einen wärmeleitfähigen Mantel aufweist. Ebenso kann zumindest eine Schicht des Mantels 22 der Medienleitung wärmeleitend ausgebildet werden. Ist die wärmeleitfähige Schicht bis zur Stirnseite der Medienleitung 2 geführt, kann eine Wärmeübertragung von der beheizten Medienleitung auf die wärmeleitfähige Schicht oder das wärmeleitfähige Material des Leitungsverbinders durch Kontakt der Stirnseite der Medienleitung mit dem entsprechenden wärmeleitfähigen Bereich des Leitungsverbinders erfolgen. Grundsätzlich ist es ferner möglich, Heizlitzen bzw. Heizelemente auch durch das Innere der Medienleitung hindurchzuführen. Dies ist in Figur 11 jedoch nicht gezeigt.

Die Heizlitzen können entlang der Medienleitung bspw. mit einer Steigung s von 15 bis 35 mm, insbesondere 20 bis 25 mm, angeordnet werden. Hierdurch ist ein sicherer Halt auch bei Krümmen der Leitung bei der späteren Montage bspw. in einem Fahrzeug, ebenso möglich wie eine sehr gute Beheizung des innerhalb der Medienleitung geführten Mediums möglich.

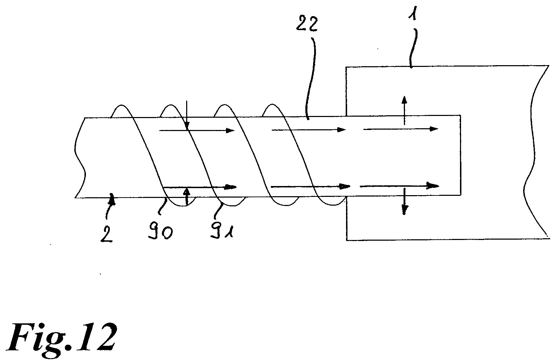

In Figur 12 ist eine radiale Wärmeeinkopplung von der Medienleitung 2 in den Leitungsverbinder 1 skizziert, wobei aus dem Mantel 22 der Medienleitung 2 Wärme radial in den Leitungsverbinder eingekoppelt wird. Figur 12 zeigt das Prinzip der radialen Wärmeeinkoppelung aus der Medienleitung 2 bzw. den entlang von dieser vorgesehenen Heizlitzen 90, 91 in den Leitungsverbinder 1 hinein.

Wie Figur 10 entnommen werden kann, dient der Bereich, der von den beiden Heizlitzen 90, 91 umgeben wird, als Wärmeeinkopplungsbereich WE und der Bereich, in dem Wärme transportiert wird, umfassend den Kupplungsabschnitt und den Winkelabschnitt, als Wärmetransportbereich WT. Insbesondere der Wärmetransportbereich ist daher wärmeleitfähig ausgebildet, insbesondere durch die in den Figuren 1 bis 4 gezeigten Möglichkeiten.

Als Material für den Leitungsverbinder bzw. insbesondere den wärmeleitfähigen Teil des Leitungsverbinders ist ein Material mit einer Wärmeleitfähigkeit von 1 bis 20 W/(m•K) insbesondere 1 bis 7 W/(m·K) vorgesehen. Ferner erweist es sich als vorteilhaft, ein Material zu verwenden, das eine Bruchdehnung von 1 bis 10 %, insbesondere eine Bruchdehnung von etwa 2 % aufweist. Eine hohe Wärmeleitfähigkeit wird durch einen möglichst hohen Füllstoffanteil erzielt, der jedoch die mechanischen Eigenschaften, insbesondere von Kunststoff, stark verschlechtert, so dass Kunststoff sehr spröde wird und seine Festigkeit abnimmt.

Daher wird ein guter Kompromiss zwischen der gewünschten hohen Wärmeleitfähigkeit und guten mechanischen Eigenschaften ausgewählt. Als Füllstoff eignen sich vor allem mineralische Füllstoffe, wie Langglasfasern oder Kurzglasfasern. Beispielsweise kann ein Polymer PA66 mit Langglasfasern als Füllstoff verwendet werden, das eine Zugfestigkeit von etwa 145 MPa und eine Bruchdehnung von 2 % aufweist, wie bspw. Star-Therm^{®} WG A-2 der Firma EPIC Polymers Ltd., Kaiserslautern. Ebenfalls eignet sich, da sehr gut leitend, ein Polymer PA 66 mit Kurzglasfasern als Füllstoff auf Kohlenstoffbasis (Graphite) mit einer Zugfestigkeit von 60 MPa und einer Bruchdehnung von 0,9 %, bspw. das Produkt Alcom PA66 910/30.1 GF15 TCE5 der Firma ALBIS Plastic GmbH. Auch andere wärmeleitfähige Materialien eignen sich zur Herstellung des Leitungsverbinders, insbesondere auch Materialkombinationen.

Neben den im Vorstehenden beschriebenen und in den Zeichnungen gezeigten Ausführungsvarianten von Leitungsverbindern und konfektionierten Medienleitungen mit solchen Leitungsverbindern können noch zahlreiche weitere gebildet werden, bei denen jeweils der Leitungsverbindern zumindest teilweise aus einem wärmeleitfähigen oder wärmeleitenden Material besteht, wobei in den Körper des Leitungsverbinders keine Heizelemente eingebettet sind.

### Bezugszeichenliste

- 1: Leitungsverbinder, gerade
- 2: Medienleitung
- 3: Befestigungsclip
- 4: Leitungsverbinder, abgewinkelt
- 5: Kapselung
- 7: konfektionierte Medienleitung
- 8: Leitungsverbinder
- 9: Heizelement
- 10: Leitungsanschlussabschnitt
- 11: hülsenförmiger steckerartiger Teil
- 12: äußerer hülsenförmiger Teil
- 13: Zwischenraum
- 14: innere Durchgangsöffnung
- 15: Kupplungsabschnitt
- 16: wärmeleitendes/wärmeleitfähiges Hülsenelement
- 17: hülsenförmiger steckerartiger Teil
- 18: auskragender flanschartiger Teil
- 19: innere Durchgangsöffnung
- 20: Wellrohr
- 21: Befestigungsclip
- 22: Mantel
- 23: Klebe- bzw. Gewebeklebeband
- 30: Befestigungsabschnitt
- 40: wärmeleitendes/wärmeleitfähiges Hülsenelement
- 41: innere Durchgangsöffnung
- 42: Winkelabschnitt
- 43: Steckabschnitt
- 44: Kupplungsabschnitt
- 45: Zentrieransatz
- 46: flanschartige Auskragung
- 47: Kupplungsabschnitt
- 48: Anschlussabschnitt
- 49: Nut
- 50: Luftspalt
- 60: innerer wärmeleitfähiger Teil
- 61: äußerer isolierender Teil
- 62: innere Durchgangsöffnung
- 63: Kupplungsabschnitt
- 64: Anschlussbereich
- 80: seitlich abzweigender Anschlussabschnitt
- 81: Stift
- 82: Stift
- 90: erste Heizlitze
- 91: zweite Heizlitze
- 92: dritte Heizlitze
- 93: Verbindungs-/Crimpstelle
- 94: Verbindungs-/Crimpstelle
- 95: Kaltleiter
- 96: Kaltleiter
- 97: Stecker
- 98: Verbindungs-/Crimpstelle
- 100: Nut
- 142: Nut
- 146: Auskragung
- 190: Ende
- 191: Ende
- 192: Ende
- 193: Ende
- 242: Rippe
- 243: Nut
- W: Wandstärke
- S: Steigung
- WE: Wärmeeinkopplungsbereich
- WT: Wärmetransportbereich

## Patentansprüche

1. Konfektionierte Medienleitung (7) mit zumindest einer beheizbaren Medienleitung (2) und mit zumindest einem zumindest teilweise beheizbaren Leitungsverbinder (1,4,8), der zumindest einen als Anschlussabschnitt ausgebildeten Teil (10,11,17,43,48,80) aufweist, wobei der Leitungsverbinder (1,4,8) als Zweikomponenten-Spritzgussteil ausgebildet ist und zumindest teilweise aus einem wärmeleitfähigen oder wärmeleitenden Material besteht,
wobei das wärmeleitfähige oder wärmeleitende Material des Leitungsverbinders (1,4,8) ein Material ist, das Wärme besser leitet als das Material oder zumindest eines der Materialien der Medienleitung (2), wobei das wärmeleitfähige oder wärmeleitende Material zumindest im Bereich des Anschlussabschnitts vorgesehen und ein wärmeleitfähiger Kunststoff mit einer Wärmeleitfähigkeit von 1 bis 20 W/(m·K) ist, und wobei Heizelemente auf der Außenseite des Leitungsverbinders (1,4,8) angeordnet sind und/oder ein Heizsystem, das Wärme in radialer Richtung in den Leitungsverbinder einkoppelt, vorgesehen ist.

2. Konfektionierte Medienleitung (7) nach Anspruch 1,
**dadurch gekennzeichnet, dass**
die Medienleitung (2) mit zumindest einem Heizelement (9), insbesondere zumindest einem sich durchgängig entlang der Medienleitung (2) erstreckenden Heizelement (9), versehen ist, insbesondere mit zumindest einem Heizdraht, insbesondere zwei Heizdrähten.

3. Konfektionierte Medienleitung (7) nach einem der Ansprüche 1 oder 2, **dadurch gekennzeichnet, dass**
die Medienleitung (2) zumindest eine Schicht aus einem leitfähigen oder leitenden Kunststoff enthält, insbesondere mit Kontaktierungselementen versehen ist, insbesondere die wärmeerzeugende Schicht Heizelemente zum Beheizen des Kunststoffmaterials aufweist.

4. Konfektionierte Medienleitung (7) nach einem der Ansprüche 1 bis 3,
**dadurch gekennzeichnet, dass**
im Bereich der Leitungsverbinder (1,4,8) zumindest eine Heizlitze (90,91,92) angeordnet wird, insbesondere ein, zwei oder vier Heizlitzen (90,91,92), wobei bei Vorsehen einer Heizlitze sich diese durchgängig entlang der Medienleitung (2) und des zumindest einen Leitungsverbinders (1,4,8) erstreckt, bei Vorsehen zweier Heizlitzen (90,91) sich beide entlang der Medienleitung (2) erstrecken und zumindest eine der beiden Heizlitzen (90,91) zum Umwickeln des Leitungsverbinders (1,4,8) vorgesehen ist, bei Vorsehen vierer Heizlitzen (90,91,92) sich zwei Heizlitzen (90,91) entlang der Medienleitung (2) erstrecken und zwei Heizlitzen (92) zum Umwickeln der Leitungsverbinder (1,4,8) vorgesehen sind, insbesondere im Bereich des einen Leitungsverbinders (1,4,8) eine andere Anzahl von Heizlitzen (90,91,92) angeordnet ist als an dem anderen.

5. Konfektionierte Medienleitung (7) nach Anspruch 1,
**dadurch gekennzeichnet, dass**
das wärmeleitfähige Material ein wärmeleitfähiger Kunststoff mit einer Wärmeleitfähigkeit von 1 bis 7 W/(m·K) ist.

6. Konfektionierte Medienleitung (7) nach Anspruch 1 oder 5,
**dadurch gekennzeichnet, dass**
der Leitungsverbinder (1,4,8) zumindest im größten Teil des Bereichs aus einem wärmeleitfähigen oder wärmeleitenden Material besteht, in dem Medium durch den Leitungsverbinder (1,4,8) hindurch leitbar ist oder hindurch geleitet wird.

7. Konfektionierte Medienleitung (7) nach einem der Ansprüche 1, 5 oder 6, **dadurch gekennzeichnet, dass**
der als Anschlussabschnitt des Leitungsverbinders (1,4,8) ausgebildete Teil (11,17,43,48,80) steckerartig ist.

8. Konfektionierte Medienleitung (7) nach einem der Ansprüche 1 oder 7,
**dadurch gekennzeichnet, dass**
der Leitungsverbinder (1,4) zumindest ein wärmeleitfähiges oder wärmeleitendes Hülsenelement (16,40) umfasst, das als Zweikomponenten-Spritzgussteil mit diesem fest verbunden ist.

9. Konfektionierte Medienleitung (7) nach einem der Ansprüche 1 oder 5 bis 8,
**dadurch gekennzeichnet, dass**
ein innerer Teil (60) wärmeleitfähig und ein äußerer Teil (61) des als Zweikomponenten-Spritzgussteil ausgebildeten Leitungsverbinders (1) thermisch isolierend ausgebildet ist, insbesondere ein Anschlussabschnitt (43,64) des Leitungsverbinders zum Verbinden mit der Medienleitung (2) lasertransparent ausgebildet ist.

10. Konfektionierte Medienleitung (7) nach einem der Ansprüche 1 oder 5 bis 9,
**dadurch gekennzeichnet, dass**
der Leitungsverbinder (1,4,8) eine Isolationseinrichtung (3,5) zum thermischen und/oder elektrischen Isolieren umfasst, insbesondere. zumindest teilweise von zumindest einer ein Luftvolumen zur thermischen Isolation einschließenden Isolations- und/oder Schutzeinrichtung (5) umgeben ist und/oder im Bereich eines Verbindungsabschnitts zum Verbinden mit einem Stecker oder der Medienleitung (2) eine Isolationseinrichtung zum außenseitigen thermischen Isolieren vorgesehen ist, insbesondere ein Befestigungsclip (3), der ein Luftvolumen oder einen Luftspalt zum Leitungsverbinder (1,4,8) einschließt.

11. Konfektionierte Medienleitung (7) nach einem der Ansprüche 1 oder 5 bis 10,
**dadurch gekennzeichnet, dass**
der Leitungsverbinder (1,4,8) so ausgebildet ist, dass mittels einer Einrichtung zur Wärmeeinkopplung Wärme in radiale Richtung in den Leitungsverbinder (1,4,8) einkoppelbar ist, insbesondere im Verbindungsbereich mit der Medienleitung (2).

12. Konfektionierte Medienleitung (7) nach einem der Ansprüche 1 oder 5 bis 11,
**dadurch gekennzeichnet, dass**
der Leitungsverbinder (1,4,8) zum axialen Wärmetransport mit einer Wandstärke (w) von 1 bis 20 mm versehen ist, insbesondere mit einer Wandstärke (w) von 2 bis 5 mm.

13. Konfektionierte Medienleitung (7) nach einem der Ansprüche 1 oder 5 bis 12,
**dadurch gekennzeichnet, dass**
der Leitungsverbinder (1,4,8) mit zumindest einem Befestigungselement
und/oder Führungselement (242,243) zum außenseitigen Anordnen von Heizelementen (9) und zum Verbessern der Wärmeeinleitung versehbar oder versehen ist, insbesondere mit einer Rippenstruktur.

## Claims

1. Assembled media pipeline (7) with at least one heatable media pipeline (2) and with at least one at least partially heatable pipeline connector (1,4,8) which has at least one part (10,11,17,43,48,80) constructed as a connection section,
wherein the pipeline connector (1,4,8) is constructed as a two-component injection moulding and consists at least partially of a thermally conductive or heat-conducting material,
wherein thermally conductive or heat-conducting material of the pipeline connector (1,4,8) is a material which conducts heat better than the material or at least one of the materials of the media pipeline (2),
wherein the thermally conductive or heat-conducting material is provided at least in the region of the connection section and is a thermally conductive plastic with a thermal conductivity of 1 to 20 W/(m·K),
and
wherein heating elements are arranged on the outside of the pipeline connector (1,4,8) and/or a heating system which couples heat into the pipeline connector in a radial direction is provided.

2. Assembled media pipeline (7) according to claim 1, **characterised in that**
the media pipeline (2) is provided with at least one heating element (9), particularly at least one heating element (9) extending continuously along the media pipeline (2), particularly with at least one heating wire, particularly two heating wires.

3. Assembled media pipeline (7) according to one of claims 1 or 2,
**characterised in that**
the media pipeline (2) comprises at least one layer made up of a conductive or conducting plastic, particularly is provided with contacting elements, in particular, the heat generating layer has heating elements for heating the plastic material.

4. Assembled media pipeline (7) according to one of claims 1 to 3,
**characterised in that**
at least one heating strand (90,91,92), particularly one, two or four heating strands (90,91,92), are arranged in the region of the pipeline connector (1,4,8), wherein in the case of a provision of one heating strand, the same extends continuously along the media pipeline (2) and the at least one pipeline connector (1,4,8), in the case of a.provision of two heating strands (90,91), both extend along the media pipeline (2) and at least one of the two heating strands (90,91) is provided for wrapping the pipeline connector (1,4,8), in the case of a provision of four heating strands (90,91,92), two heating strands (90,91) extend along the media pipeline (2) and two heating strands (92) are provided for wrapping the pipeline connectors (1,4,8), in particular, a different number of heating strands (90,91,92) is arranged in the region of the one pipeline connector (1,4,8) than on the other.

5. Assembled media pipeline (7) according to claim 1, **characterised in that**
the thermally conductive material is a thermally conductive plastic with a thermal conductivity of 1 to 7 W/(m·K).

6. Assembled media pipeline (7) according to claim 1 or 5, **characterised in that**
the pipeline connector (1,4,8) consists at least for the majority of the region of a thermally conductive or heat-conducting material, in which a medium can be conveyed through or is conveyed through the pipeline connector (1,4,8).

7. Assembled media pipeline (7) according to one of claims 1, 5 or 6,
**characterised in that**
the part (11,17,43,48,80) constructed as a connection section of the pipeline connector (1,4,8) is plug-like.

8. Assembled media pipeline (7) according to one of claims 1 or 7,
**characterised in that**
the pipeline connector (1,4) comprises at least one thermally conductive or heat-conducting sleeve element (16,40), which is securely connected to the same as a two-component injection moulding.

9. Assembled media pipeline (7) according to one of claims 1 or 5 to 8,
**characterised in that**
an internal part (60) is constructed in a thermally conductive manner and an external part (61) of the pipeline connector (1), constructed as a two-component injection moulding, is constructed in a thermally insulating manner, in particular a connection section (43,64) of the pipeline connector for connecting to the media pipeline (2) is constructed in a laser-transparent manner.

10. Assembled media pipeline (7) according Lo one of claims 1 or 5 to 9,
**characterised in that**
the pipeline connector (1,4,8) comprises an insulating apparatus (3,5) for thermal and/or electrical insulation, in particular, is at least partially surrounded by at least one insulating and/or protective apparatus (5) enclosing an air volume for thermal insulation, and/or an insulating apparatus for external thermal insulation is provided in the region of a connecting section for connecting to a plug or the media pipeline (2), particularly a fastening clip (3), which encloses an air volume or an air gap with respect to the pipeline connector (1,4,8).

11. Assembled media pipeline (7) according to one of claims 1 or 5 to 10,
**characterised in that**
the pipeline connector (1,4,8) is constructed in such a manner that heat can be coupled into the pipeline connector (1,4,8) in a radial direction, particularly in the connecting region to the media pipeline (2), by means of an apparatus for heat coupling.

12. Assembled media pipeline (7) according to one of claims 1 or 5 to 11,
**characterised in that**
the pipeline connector (1,4,8) is provided with a wall thickness (w) of 1 to 20 mm for axial thermal transport, in particular with a wall thickness (w) of 2 to 5 mm.

13. Assembled media pipeline (7) according to one of claims 1 or 5 to 12,
**characterised in that**
the pipeline connector (1,4,8) can be or is provided with at least one fastening element and/or guide element (242,243) for external arrangement of heating elements (9) and for improving the introduction of heat, particularly with a ribbed structure.

## Revendications

1. Conduite de fluide confectionnée (7) avec au moins une conduite de fluide (2) pouvant être chauffée et avec au moins un connecteur de conduite (1, 4, 8) pouvant être chauffé au moins partiellement qui présente au moins une partie (10, 11, 17, 43, 48, 80) réalisée comme section de raccordement, dans laquelle le connecteur de conduite (1, 4, 8) est réalisé comme une partie moulée par injection à deux composantes et est constitué au moins partiellement d'un matériau thermoconductible ou thermoconducteur,
dans laquelle le matériau thermoconductible ou thermoconducteur du connecteur de conduite (1, 4, 8) est un matériau qui conduit mieux la chaleur que le matériau ou au moins un des matériaux de la conduite de fluide (2), dans laquelle le matériau thermoconductible ou thermoconducteur est prévu au moins dans la zone de la section de raccordement et est une matière plastique thermoconductible avec une conductibilité thermique de 1 à 20 W/(m·K), et dans laquelle des éléments chauffants sont agencés sur le côté extérieur du connecteur de conduite (1, 4, 8) et/ou un système chauffant, qui injecte la chaleur dans le sens radial dans le connecteur de conduite, est prévu.

2. Conduite de fluide confectionnée (7) selon la revendication 1,
**caractérisée en ce que**
la conduite de fluide (2) est pourvue d'au moins un élément chauffant (9), en particulier au moins un élément chauffant (9) s'étendant en continu le long de la conduite de fluide (2), en particulier d'au moins un fil de chauffage, en particulier deux fils de chauffage.

3. Conduite de fluide confectionnée (7) selon l'une des revendications 1 ou 2,
**caractérisée en ce que**
la conduite de fluide (2) contient au moins une couche d'une matière plastique conductible ou conductrice, en particulier est pourvue d'éléments de mise en contact, en particulier la couche générant de la chaleur présente des éléments chauffants pour le chauffage du matériau plastique.

4. Conduite de fluide confectionnée (7) selon l'une des revendications 1 à 3,
**caractérisée en ce que**
dans la zone du connecteur de conduite (1, 4, 8), au moins un toron chauffant (90, 91, 92) est agencé, en particulier un, deux ou quatre torons chauffants (90, 91, 92), dans laquelle lors de la prévoyance d'un toron chauffant, celui-ci s'étend en continu le long de la conduite de fluide (2) et de l'au moins un connecteur de conduite (1, 4, 8), lors de la prévoyance de deux torons de chauffage (90, 91), les deux s'étendent le long de la conduite de fluide (2) et au moins l'un des deux torons chauffants (90, 91) est prévu pour enroulement du connecteur de conduite (1, 4, 8), lors de la prévoyance de quatre torons chauffants (90, 91, 92), deux torons chauffants (90, 91) s'étendent le long de la conduite de fluide (2) et deux torons chauffants (92) sont prévus pour l'enroulement des connecteurs de conduite (1, 4, 8), en particulier dans la zone d'un connecteur de conduite (1, 4, 8), un autre nombre de torons chauffants (90, 91, 92) est agencé qu'au niveau de l'autre.

5. Conduite de fluide confectionnée (7) selon la revendication 1,
**caractérisée en ce que**
le matériau thermoconductible est un matériau plastique thermoconductible avec une conductibilité thermique de 1 à 7 W/(m·K).

6. Conduite de fluide confectionnée (7) selon la revendication 1 ou 5,
**caractérisée en ce que**
le connecteur de conduite (1, 4, 8) est constitué, au moins dans la plus grande partie de la zone, d'un matériau thermoconductible ou thermoconducteur, dans lequel du fluide peut être conduit ou est conduit par le connecteur de conduite (1, 4, 8).

7. Conduite de fluide confectionnée (7) selon l'une des revendications 1, 5 ou 6,
**caractérisée en ce que**
la partie (11, 17, 43, 48, 80) réalisée comme section de raccordement du connecteur de conduite (1, 4, 8) est de type connecteur.

8. Conduite de fluide confectionnée (7) selon l'une des revendications 1 ou 7,
**caractérisée en ce que**
le connecteur de conduite (1, 4) comprend au moins un élément de douille (16, 40) thermoconductible ou thermoconducteur qui est relié fixement comme partie moulée par injection à deux composantes à celui-ci.

9. Conduite de fluide confectionnée (7) selon l'une des revendications 1 ou 5 à 8,
**caractérisée en ce que**
une partie intérieure (60) est réalisée de manière thermoconductible et une partie extérieure (61) du connecteur de conduite (1) réalisé comme une partie moulée par injection à deux composantes est réalisée de manière thermoisolante, en particulier une section de raccordement (43, 64) du connecteur de conduite est réalisée pour la liaison avec la conduite de fluide (2) de manière transparente au laser.

10. Conduite de fluide confectionnée (7) selon l'une des revendications 1 ou 5 à 9,
**caractérisée en ce que**
le connecteur de conduite (1, 4, 8) comprend un dispositif d'isolation (3, 5) pour l'isolation thermique et/ou électrique, en particulier est entouré au moins partiellement d'au moins un dispositif d'isolation et/ou de protection (5) englobant un volume d'air pour l'isolation thermique et/ou dans la zone d'une section de liaison pour la liaison avec un conducteur ou la conduite de fluide (2), un dispositif d'isolation est prévu pour l'isolation thermique côté extérieur, en particulier un clip de fixation (3) qui englobe un volume d'air ou une fente d'air par rapport au connecteur de conduite (1, 4, 8).

11. Conduite de fluide confectionnée (7) selon l'une des revendications 1 ou 5 à 10,
**caractérisée en ce que**
le connecteur de conduite (1, 4, 8) est réalisé de sorte qu'à l'aide d'un dispositif pour l'injection de chaleur, de la chaleur peut être injectée dans le sens radial dans le connecteur de conduite (1, 4, 8), en particulier dans la zone de liaison avec la conduite de fluide (2).

12. Conduite de fluide confectionnée (7) selon l'une des revendications 1 ou 5 à 11,
**caractérisée en ce que**
le connecteur de conduite (1, 4, 8) est pourvu, pour le transport thermique axial, d'une épaisseur de paroi (w) de 1 à 20 mm, en particulier d'une épaisseur de paroi (w) de 2 à 5 mm.

13. Conduite de fluide confectionnée (7) selon l'une des revendications 1 ou 5 à 12,
**caractérisée en ce que**
le connecteur de conduite (1, 4, 8) peut ou est pourvu d'au moins un élément de fixation et/ou élément de guidage (242, 243) pour l'agencement côté extérieur d'éléments chauffants (9) et pour l'amélioration de l'introduction de chaleur, en particulier d'une structure nervurée.
